# FASCICULE DE BREVET EUROPEEN

(11) **EP 0 645 414 B1**
(45) Date de publication et mention de la délivrance du brevet: **21.10.1998**
(21) Numéro de dépôt: 94402130.2
(22) Date de dépôt: 23.09.1994
(51) Int. Cl.: C08G 73/02

(54) **Copolymère à propriétés magnétiques, son procédé de fabrication et ses applications**
Copolymere mit magnetischen Eigenschaften, Verfahren zur Herstellung und Verwendung
Copolymer with magnetic properties, its method of fabrication and its uses

(30) Priorité: 28.09.1993 FR 9311504
(43) Date de publication de la demande: 29.03.1995
(73) Titulaire: ALCATEL ALSTHOM COMPAGNIE GENERALE D'ELECTRICITE, 75382 Paris Cédex 08 (FR)
(72) Inventeur: Galaj, Stanislas, F-94110 Arcueil (FR); Le Mehaute, Alain, F-91190 Gif Sur Yvette (FR)
(74) Mandataire: Laroche, Danièle

(56) Documents cités:
- EP-A- 0 455 224
- EP-A- 0 545 819
- WO-A-91/06887
- ELECTROCHIMICA ACTA, vol.35, no.4, 1990, OXFORD GB pages 741 - 748 AREVALO ET AL. 'Mechanism of electropolymerization of 1-naphtylamine in aqueous acid media'

## Description

La présente invention concerne un copolymère à propriétés magnétiques comportant des radicaux multivalents issus de composés aminoaromatiques. Elle s'étend en outre à son procédé de fabrication et aux applications de ce copolymère.

La demande de brevet européen EP-O 545 819 décrit des copolymères à propriétés magnétiques composés de deux groupes de composés aminoaromatiques, dont le premier est basé sur les dérivés par substitution de l'aniline dont la formule est:

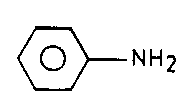

Mais ce copolymère est de préparation longue et fastidieuse. En effet, le rendement de réaction est faible et le produit obtenu contient le copolymère et une quantité importante de monomère n'ayant pas réagit. L'extraction du copolymère nécessite donc l'emploi de différents mélanges de solvants et la répétition du lavage de nombreuses fois.

Par ailleurs si l'homopolymérisation de l'aniline est couramment pratiquée, l'homopolymérisation de la 1-naphtylamine a fait l'objet de plusieurs tentatives sans succès. En particulier, l'électropolymérisation de la 1-naphtylamine a été étudiée par GENIES et LAPKOWSKI (Electrochim. Acta 32, 1223, 1987) en milieu eutectique NH₄F/HF et n'a permis d'obtenir que le dimère formé par liaison carbone-carbone de la forme: 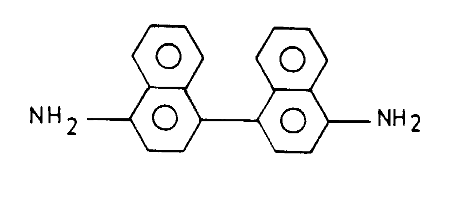 De plus, les conditions de synthèse utilisées par ces auteurs sont difficiles à mettre en oeuvre et peu envisageables industriellement.

En milieu acide aqueux (Electrochim. Acta 35(4), 741-748, 1990), l'électrooxydation de la 1-naphtylamine conduit à la formation d'un film conducteur peu électroactif, adhérent à l'électrode, composé de 1-naphthidine dimère formé par liaison carbone-carbone, et d'un produit formé par liaison carbone-azote dont il n'a pas été possible de déterminer s'il s'agit du dimère ou du polymère qui auraient pour formule, avec n supérieur ou égal à 1 : 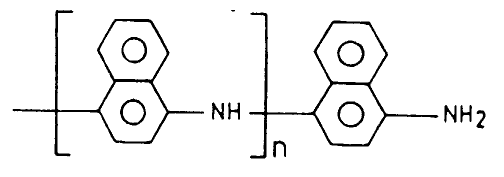 Il n'est pas mentionné pour ce film de propriétés magnétiques.

Le but de la présente invention est de procurer un copolymère présentant des propriétés magnétiques dont la synthèse soit aisément réalisable sur le plan industriel.

A cet effet, la présente invention propose un copolymère à propriétés magnétiques dont le motif élémentaire comporte un premier radical multivalent issu d'un composé choisi parmi la 1-naphtylamine éventuellement substituée prise sous sa forme réduite ou oxydée, et un second radical multivalent issu d'un composé aminoaromatique choisi parmi un composé aminé substitué comprenant au moins deux noyaux benzéniques condensés, un composé polycyclique substitué comprenant au moins le motif aniline dans sa structure, et un composé dérivé de l'aniline portant un substituant relié au noyau par un maillon éthynylidène ou paraphénylène, ces composés étant pris sous leur forme réduite ou oxydée, ledit premier et ledit second radical étant reliés entre eux par une liaison carbone-azote et les atomes d'azote étant séparés par un seul cycle aromatique.

Ces deux radicaux sont de préférence reliés entre eux par des liaisons carbone-azote placées en position para du cycle aromatique, ce qui confère au polymère des propriétés ferromagnétiques. Lorsque le taux de liaisons situées en position ortho ne dépasse pas 15%, le ferromagnétisme est conservé. Les motifs élémentaires sont ainsi liés entre eux par des liaisons carbone-azote permettant de respecter dans la chaîne principale l'alternance -ϕ-N-ϕ-N-ϕ-N-ϕ-N- où ϕ désigne un cycle aromatique.

Suivant les auteurs, la 1-naphtylamine est également appelée α-naphtylamine, naphtyl-1 amine, ou bien encore 1-aminonaphtalène. Sa formule est:

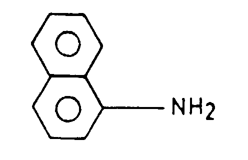

Un même radical peut se présenter sous sa forme oxydée ou sous sa forme réduite, correspondant à l'équilibre

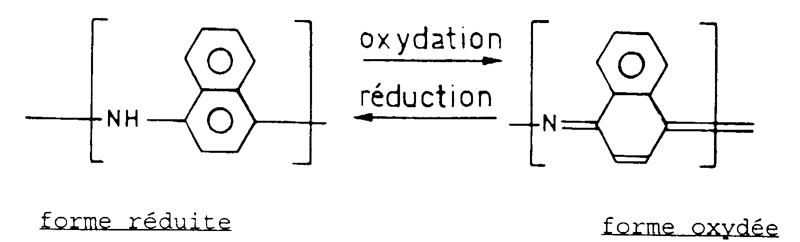

Comme exemple de composé aminé substitué comprenant au moins deux noyaux benzèniques condensés on peut citer les composés suivants: 1-amino-5-bromonaphtalène, 1-amino-2-chloronaphtalène, N-phényl-1-naphtylamine, N-méthyl-N-phényl-1-naphtylamine, 1-amino-2-métoxynaphtalène, 1-méthylamino-2-métoxynaphtalène, 8-amino-2-métoxynaphtalène, ou bien encore 8-méthylamino-2-métoxynaphtalène.

On définit un composé polycyclique (cf. HANDBOOK of CHEMISTRY and PHYSICS, 1978, page C-19, règle 32-12) comme un composé contenant un nombre de cycles égal au nombre de scissions nécessaires pour transformer ce composé cyclique en un composé linéaire. Un tel composé peut être par exemple: 1-amino-5,6,7,8-tétrahydronaphtalène, 1-amino-9-fluorénone, 1-(méthylamino)anthraquinone, 1-aminofluorène, 1-aminoanthraquinone.

La présente invention a également pour objet un copolymère à propriétés magnétiques dont le motif élémentaire comporte le premier radical A et le second radical B sous leur forme oxydée ou réduite et répond à la formule générale: 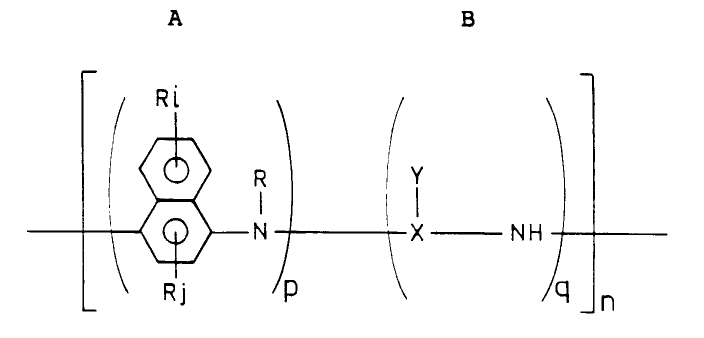 où dans ledit radical A:
- Rᵢ (i= 1 à 4) représente un à quatre substituants, chaque substituant étant choisi parmi l'hydrogène, les radicaux chloro -Cl, bromo -Br, fluoro -F et iodo -I, un radical alkoxyalkyle (radical univalent dérivé d'un hydrocarbure acyclique linéaire) de la forme - (CH₂)_{w} - O - (CH₂)ᵥ - CH₃ avec w variant de 0 à 3 et v variant de 0 à 11 (v vaut de préférence 0 ou 1) et un radical aryle (radical univalent dérivé d'un hydrocarbure aromatique monocyclique) de la forme -ϕ, éventuellement substitués,
- Rⱼ (j= 1 ou 2) représente un ou deux substituants, chaque substituant étant choisi parmi l'hydrogène, les radicaux chloro, bromo, fluoro et iodo, un radical alcoxyalkyle et un radical aryle éventuellement substitués,
- et R est un substituant choisi parmi l'hydrogène, un radical alkyle (radical univalent dérivé d'un hydrocarbure saturé acyclique linéaire) de la forme - (CH₂)ᵥ - CH₃ avec v variant de 0 à 11 (v vaut de préférence 0 ou 1) et un radical aryle éventuellement substitués,
dans ledit radical B:
- Y est au moins un substituant donneur de proton susceptible de former un sel interne avec l'un des atomes d'azote dont il est séparé par un radical A, et dans ce cas le copolymère est principalement ferromagnétique,
lorsque le substituant Y forme des liaisons salines avec l'un des autres atomes d'azote, on obtient un copolymère qui est principalement paramagnétique,
- et X est un radical multivalent issu d'un composé comprenant au moins un noyau aromatique susceptible de se placer dans la chaîne principale dudit copolymère, choisi parmi un composé comprenant au moins deux noyaux benzéniques condensés, un composé polycyclique comprenant au moins un noyau aromatique, un composé comprenant un noyau aromatique portant un maillon éthynylidène ou phénylène,
et dans ladite formule générale:
- p et q sont des entiers aléatoires compris entre 1 et 3,
- et n est un entier supérieur à 2, et le plus élevé possible.

Les copolymères ferromagnétiques obtenus selon la présente invention ont une densité inférieure à 1,5 et donc l'avantage d'être plus légers que les autres produits ferromagnétiques utilisés généralement comme les métaux ou les ferrites.

On entend par radical issu d'un composé comprenant au moins un noyau aromatique susceptible de se placer dans la chaîne principale, un radical susceptible de former deux liaisons entre un carbone du noyau aromatique et un atome d'azote.

Lorsque X est issu d'un composé comprenant au moins deux noyaux benzéniques condensés, le substituant Y est de préférence porté par le noyau qui ne se trouve pas dans la chaîne principale. Le radical multivalent B est par exemple un radical de la forme:

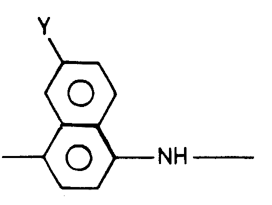

Lorsque X est issu d'un composé polycyclique comprenant au moins un noyau aromatique, le substituant Y est de préférence porté par le noyau qui ne se trouve pas dans la chaîne principale. Le radical multivalent B est par exemple un radical de la forme:

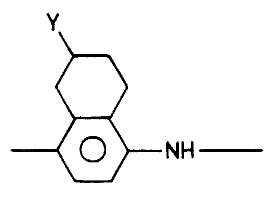

Lorsque X est issu d'un composé comprenant un noyau aromatique portant un maillon éthynylidène ou phénylène, le substituant Y est alors porté par le maillon. Le radical multivalent B est par exemple un radical de la forme:

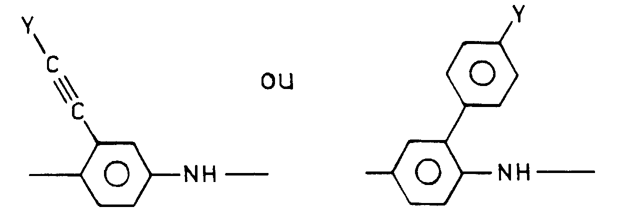

Le long de la chaîne du polymère, les motifs élémentaires peuvent comporter un nombre différent de radicaux A et B. De plus, compte-tenu des incertitudes opératoires, il peut arriver que localement p ou q soit exceptionnellement nul. Néanmoins la configuration la plus souhaitable est l'alternance rigoureuse des radicaux A et B.

Selon un mode de réalisation préférentiel de la présente invention, les trois conditions suivantes sont remplies simultanément:
- p = 1 et q = 1,
- la liaison X-Y est rigide, certaines liaisons internes sont ainsi privilégiées,
- Y est au moins un substituant choisi parmi un substituant sulfo -SO₃H, phosphono -PO₃H, et carboxy.-CO₂H.

De préférence X est un radical multivalent issu d'un noyau naphtalène.

Avantageusement le radical B est un radical multivalent issu d'un acide choisi parmi les acides de CLEVE: acide 8-amino-2-naphtalènesulfonique (forme θ) et acide 5-amino-2-naphtalènesulfonique (forme β), l'acide de LAURENT: acide 1-amino-5-naphtalènesulfonique, l'acide de PERI: acide 1-amino-8-naphtalènesulfonique, et les diacides: acide 1-naphtylamino-5,7-disulfonique et acide 1-naphtylamino-6,8-disulfonique. Dans ce cas, X est un noyau naphtalène et Y est un substituant sulfo -SO₃H.

Suivant les monomères utilisés, les copolymères selon l'invention peuvent être auto-dopés, mais dans le cas contraire on peut les doper afin de les rendre conducteurs. Les copolymères conducteurs selon la présente invention peuvent être utilisés pour le blindage de câbles qui y gagnent alors en souplesse et légèreté.

Avantageusement, un quart des radicaux A et/ou B se trouvent sous forme oxydée. Et de préférence, la moitié des radicaux B est sous la forme oxydée et l'autre moitié est sous la forme réduite, ceci favorise la formation d'un sel interne qui stabilise la structure et provoque l'apparition du ferromagnétisme.

Le procédé de fabrication du copolymère selon l'invention comprend
- une première étape de copolymérisation en solution ou suspension d'un premier monomère qui est une 1-naphtylamine éventuellement substituée et d'un second monomère qui est un composé aminoaromatique substitué, et
- une deuxième étape de purification et de séparation du milieu réactionnel dudit copolymère.

La seconde étape inclue un lavage du copolymère obtenu par une solution faiblement basique comme par exemple une solution diluée de N-méthylformamide ou d'ammoniaque dans l'eau, suivi d'un lavage par un mélange d'eau et de méthanol. Cette étape a pour but d'éliminer les impuretés solubles du produit obtenu, et en particulier les résidus de monomères.

Selon un mode de fabrication préférentiel, la copolymérisation est effectuée dans un milieu acide choisi parmi l'acide sulfurique, l'acide phosphorique, l'acide perchlorique, l'acide paratoluènesulfonique, l'acide formique, l'acide acétique et l'acide trifluoroacétique.

En outre, le milieu acide peut contenir un solvant (cas d'une solution) ou un dispersant (cas d'une suspension) choisi de préférence parmi l'eau, les alcools comme le méthanol, les cétones comme l'acétone, les acides organiques comme l'acide acétique ou l'acide formique, et leurs mélanges.

On effectue la copolymérisation en ajoutant lentement un agent oxydant à la suspension ou solution contenant le mélange des monomères. Selon une première forme d'exécution, l'agent oxydant est choisi parmi l'eau oxygénée H₂O₂ et l'acide iodique HIO₃. Suivant le cas, l'agent oxydant peut être employé pur ou en solution.

Selon une seconde forme d'exécution, ledit agent oxydant est l'oxygène gazeux.

Selon une troisième forme d'exécution, on effectue la copolymérisation par oxydation en présence d'une électrode active sous tension. La voie électrochimique permet d'ajuster le taux d'oxydation du copolymère.

Selon encore une autre forme d'exécution, la copolymérisation est effectuée par oxydation en présence d'un catalyseur qui permet d'accroître le rendement de la réaction.

Selon une première variante du mode de fabrication du copolymère, le procédé comporte en outre une troisième étape d'enrichissement en copolymère magnétique du produit obtenu à l'issue de la deuxième étape. On extrait du copolymère une phase soluble par mise en solution dans un solvant basique volatil, puis la solution est rapidement évaporée sous vide pour obtenir un résidu solide qui est traité thermiquement à environ 110°C sous vide pour régénérer les propriétés ferromagnétiques du copolymère. De préférence, le solvant est l'ammoniac liquide anhydre.

Le traitement thermique a pour but de rompre les liaisons salines qui se sont créées entre le solvant basique et le substituant Y du copolymère, au profit de la formation d'autres liaisons salines entre le substituant Y et les sites amines et/ou imines du copolymère portés par le premier radical A. Ces nouvelles liaisons salines peuvent se créer au sein d'une même chaîne principale, ou bien entre plusieurs chaînes du copolymère. Ce sont ces nouvelles liaisons qui sont responsables de l'apparition des caractéristiques ferromagnétiques du copolymère en équilibrant les contraintes stériques très fortes, ce qui modifie profondément la structure électronique du copolymère.

Selon une seconde variante du mode de fabrication, le procédé comporte en outre une troisième étape d'enrichissement en copolymère magnétique du produit obtenu à l'issue de la deuxième étape. On extrait du copolymère une phase soluble par mise en solution dans un solvant basique volatil, puis on précipite la phase soluble en acidifiant la solution ce qui provoque la décomposition du sel d'ammonium du copolymère qui s'est formé. Le copolymère obtenu est principalement amorphe. Il se présente sous forme de gel à l'état humide et de blocs poreux à l'état sec. En milieu basique, sa couleur est bleu violacé, il devient vert foncé en milieu acide.

De préférence, le solvant est une solution d'une base volatile dans un solvant organique, comme par exemple une solution ammoniacale alcoolique.

Selon encore une autre variante, la solidification (séchage ou précipitation) de la phase soluble est effectuée sous champ magnétique ou/et électrique.

Le copolymère selon l'invention peut être utilisé sous des formes différentes. Selon un premier mode de mise en oeuvre, le copolymère est mis en suspension ou en solution pour former un ferro-fluide. Confiné dans un champ magnétique, il peut être utilisé par exemple comme joint magnétique. Il permet aussi l'obtention d'adhésifs.

Selon un autre mode de mise en oeuvre, le copolymère portant un substrat Y donneur de proton est salifié par une base volumineuse comme l'hydroxyde de tétraalkylammonium. Cette opération a pour but de rendre le polymère fusible pour permettre sa mise en forme en couche mince.

Dans ce cas, l'épaisseur de la couche déposée peut être extrêmement faible de l'ordre du nanomètre, ce qui permet son application dans diverses techniques de microscopie: les microscopes tunnel, les microscopes à force atomique, les microscopes en champ proche et les microscopes à onde évanescente.

Selon une variante, le copolymère est déposé en plusieurs couches minces séparées par une couche d'un matériau magnétique différent dudit copolymère et choisi parmi un matériau diamagnétique, un matériau ferromagnétique, un matériau ferrimagnétique et un matériau paramagnétique.

Les copolymères de l'invention se prêtent à de nombreuses applications du fait de leurs fortes propriétés magnétiques. On peut les déposer en couche mince sur des supports, comme le polyéthylène, le polychlorure de vinyle, le polyméthacrylate de méthyle, les polycarbonates, les résines époxydes. Ils peuvent à ce titre servir de support d'information écrite, notamment pour billets ou cartes bancaires, mais également comme supports photographiques ou radiographiques.

Ces copolymères trouvent des applications dans les dispositifs hyperfréquences, notamment les guides d'ondes, les circulateurs, les polariseurs, les absorbants, les blindages et les filtres. Ils conviennent également dans des systèmes optiques, notamment les écrans d'affichage, les systèmes dichroïques, de diffraction ou d'absorption de rayons X, ou de multiplexage sur fibres optiques. De manière plus générale, ils sont applicables dans les systèmes électro-magnéto-optiques et électro-magnéto-résistifs.

Un ajustement de leurs propriétés magnétiques est possible permettant leur utilisation dans des dispositifs de contrôle du magnétisme. Cet ajustement peut être réalisé par voie chimique à l'aide d'une structure catalytique, par voie électrochimique, par voie mécanique au moyen de la pression, notamment à l'aide d'un matériau piézoélectrique, ou par voie thermique.

Ces copolymères sont aussi utilisables dans l'appareillage électrique, tels que moteurs, transformateurs, inducteurs, où ils permettent l'emploi de matériaux magnétiques non métalliques.

D'autres caractéristiques et avantages de la présente invention apparaitront à la lecture des exemples suivants de modes de réalisation, donnés bien entendu à titre illustratif et non limitatif, en référence au dessin annexé sur lequel:
- la figure 1 représente la variation du signal magnétique M en fonction de la variation cyclique du champ H pour un exemple de copolymère ferromagnétique selon l'invention,
- la figure 2 est analogue à la figure 1 pour un autre exemple de copolymère ferromagnétique selon l'invention.

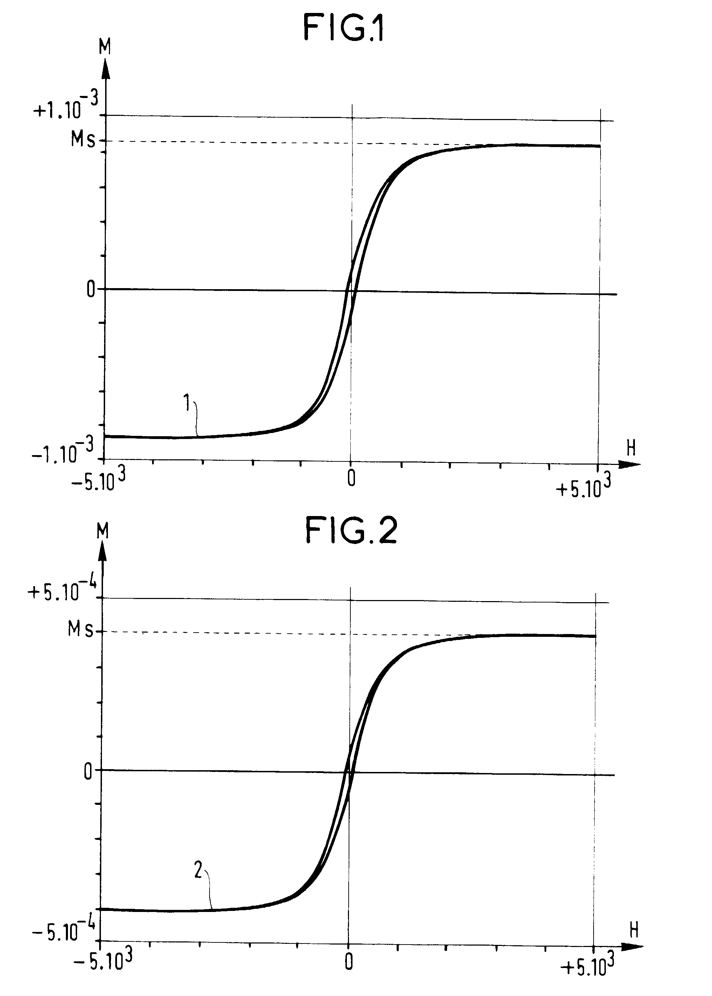

Sur les figures 1 et 2, le champ magnétique H en Oersteds est donné en abcisse, et en ordonnée le signal magnétique M en unités relatives (Unités Electro-Magnétiques: emu) pour la masse de l'échantillon de copolymère analysé.

### EXEMPLE 1

A une suspension de 0,64g de 1-naphtylamine et de 1g d'acide 5-amino-2-naphtalènesulfonique (forme β de l'acide de CLEVE) dans 10ml d'acide acétique pur, on ajoute 0,8ml d'une solution aqueuse à 50% en poids de peroxyde d'hydrogène H₂O₂. La suspension est agitée pendant 16 heures à température ambiante, puis elle est centrifugée. Le culot de centrifugation contient le copolymère recherché ainsi qu'une forte proportion du monomère de départ.

La séparation du copolymère s'obtient par redispersion du culot à plusieurs reprise dans un mélange aqueux de solvants, suivie d'une récupération par centrifugation. Quelques lavages sont effectués dans un mélange équivolumique d'eau et de méthanol, puis on réalise au moins deux lavages dans une solution à 50% de N-méthylformamide dans un mélange eau-méthanol, afin d'éliminer l'acide 5-amino-2-naphtalènesulfonique. Enfin on termine les lavages avec des solvants contenant très peu d'eau: solution à 25% en volume d'acide acétique dans le méthanol, diéthyloxyde.

Aprés un séchage sous vide primaire, on obtient 33mg de poudre noire, soit un rendement de 2%. Le copolymère conducteur autodopé obtenu est représenté par la formule générale:

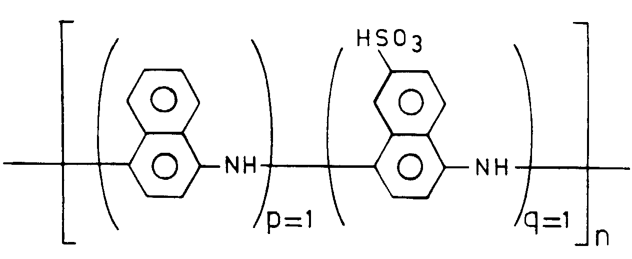

Les mesures de magnétisme sont effectuées à une température de 300K sur un magnétomètre à gradient de champ alternatif. Le résultat se présente sous la forme de la courbe 1 de la figure 1 qui montre l'évolution de l'aimantation M en fonction du champ magnétique H appliqué à l'échantillon. Cette courbe est caractéristique d'un composé ferromagnétique et présente une hystérésis. L'aimantation à saturation Mₛ est de 0,12emu/g et le champ coercitif est de l'ordre de 100 Oersteds.

### EXEMPLE 2

A une suspension agitée de 3,2g de 1-naphtylamine et 5g d'acide 5-amino-2-naphtalènesulfonique dans 20ml d'acide acétique anhydre, on ajoute goutte à goutte pendant 2 heures, un mélange constitué de 4ml d'une solution aqueuse à 50% en poids de peroxyde d'hydrogène H₂O₂ et de 10ml d'acide acétique pur. La réaction s'effectue à température ambiante et se poursuit sous agitation environ une heure après la fin de l'addition du mélange.

La suspension est alors lavée et séchée comme décrit dans l'exemple 1 et on obtient 193mg d'une poudre presque noire, soit un rendement de 2,7%.

Les mesures de magnétisme sont effectuées de la même manière que dans l'exemple 1. Le résultat se présente sous la forme de la courbe 2 de la figure 2. Cette courbe est caractéristique d'un composé ferromagnétique et présente une hystérésis. L'aimantation à saturation Mₛ est de 0,07emu/g et le champ coercitif est de l'ordre de 100 Oersteds.

### EXEMPLE 3

A une solution agitée de 0,64g de 1-naphtylamine et de 1g d'acide 5-amino-2-naphtalènesulfonique dans 20ml d'acide sulfurique à 95%, on ajoute goutte à goutte pendant une demi-heure, un mélange constitué de 0,8ml d'une solution aqueuse à 50% en poids de peroxyde d'hydrogène H₂O₂ et de 10ml d'acide sulfurique à 95%. La réaction s'effectue à température ambiante et se poursuit sous agitation environ 20mn après la fin de l'addition du mélange. La solution est alors versée dans 150ml d'eau à 0°C afin de provoquer la précipitation du copolymère.

La suspension est alors lavée et séchée comme décrit dans l'exemple 1 et on obtient 330mg d'une poudre presque noire, soit un rendement de l'ordre de 20%.

Les mesures de magnétisme sont effectuées de la même manière que dans l'exemple 1. Le copolymère obtenu est ferromagnétique. Son aimantation à saturation Mₛ est de 0,07emu/g et le champ coercitif est de l'ordre de 100 Oersteds.

### EXEMPLE 4

A une suspension agitée de 0,64g de 1-naphtylamine et d'un excès (5g) d'acide 5-amino-2-naphtalènesulfonique dans une solution de 5ml d'acide perchlorique à 70% dans 10ml d'eau, on ajoute 0,7ml de peroxyde d'hydrogène H₂O₂ à 50%. La réaction s'effectue à température ambiante et se poursuit sous agitation environ cinq heures après la fin de l'addition de l'oxydant.

La suspension est alors lavée et séchée comme décrit dans l'exemple 1 et on obtient 65mg d'une poudre presque noire, soit un rendement de 4% par rapport à la quantité stoéchiométrique des deux monomères.

Les mesures de magnétisme sont effectuées de la même manière que dans l'exemple 1. Le copolymère obtenu est ferromagnétique. Son aimantation à saturation Mₛ est de 0,17emu/g et le champ coercitif est de l'ordre de 100 Oersteds.

## Revendications

1. Copolymère à propriétés magnétiques dont le motif élémentaire comporte
- un premier radical multivalent issu d'un composé choisi parmi la 1-naphtylamine éventuellement substituée prise sous sa forme réduite ou oxydée, et
- un second radical multivalent issu d'un composé aminoaromatique choisi parmi un composé aminé substitué comprenant au moins deux noyaux benzéniques condensés, un composé polycyclique substitué comprenant au moins le motif aniline dans sa structure, et un composé dérivé de l'aniline portant un substituant relié au noyau par un maillon éthynylidène ou paraphénylène, ces composés étant pris sous leur forme réduite ou oxydée,
ledit premier et ledit second radical étant reliés entre eux par une liaison carbone-azote et les atomes d'azote étant séparés par un seul cycle aromatique.

2. Copolymère selon la revendication 1, dans lequel ledit motif élémentaire, comportant ledit premier radical A et ledit second radical B sous leur forme oxydée ou réduite, répond à la formule générale: 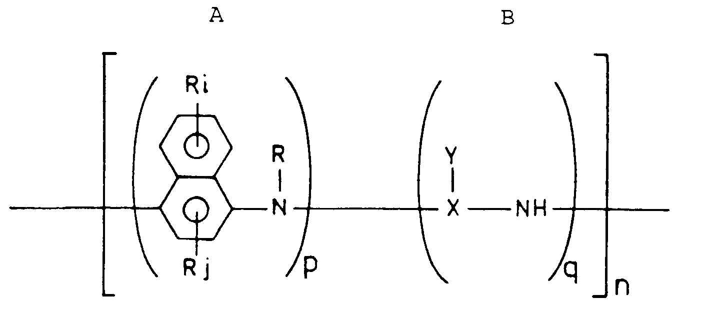 où, dans ledit radical A:
- Ri (i= 1 à 4) représente un à quatre substituants, chaque substituant étant choisi parmi l'hydrogène, les radicaux chloro, bromo, fluoro, et iodo, un radical alkoxyalkyle et un radical aryle éventuellement substitués,
- Rj (j= 1 ou 2) représente un ou deux substituants, chaque substituant étant choisi parmi l'hydrogène, les radicaux chloro, bromo, fluoro, et iodo, un radical alcoxyalkyle et un radical aryle éventuellement substitués,
- et R est un substituant choisi parmi l'hydrogène, un radical alkyle et un radical aryle éventuellement substitués,
dans ledit radical B:
- Y est au moins un substituant donneur de proton susceptible de former un sel interne avec l'un des atomes d'azote dont il est séparé par un radical A,
- et X est un radical multivalent issu d'un composé comprenant au moins un noyau aromatique susceptible de se placer dans la chaîne principale dudit copolymère, choisi parmi un composé comprenant au moins deux noyaux benzéniques condensés, un composé polycyclique comprenant au moins un noyau aromatique, un composé comprenant un noyau aromatique portant un maillon éthynylidène ou phénylène,
et dans ladite formule générale:
- p et q sont des entiers aléatoires compris entre 1 et 3,
- et n est un entier supérieur à 2, et le plus élevé possible.

3. Copolymère selon la revendication 2, dans lequel les trois conditions suivantes sont remplies simultanément:
- q = 1 et p 1,
- la liaison X-Y est rigide,
- Y est au moins un substituant choisi parmi un substituant sulfo, phosphono et carboxy.

4. Copolymère selon l'une des revendications 2 et 3, dans lequel X est un radical multivalent issu d'un composé comportant un noyau naphtalène.

5. Copolymère selon l'une des revendications 2 à 4, dans lequel ledit radical B est un radical multivalent issu d'un acide choisi parmi:
l'acide 8-amino-2-naphtalènesulfonique,
l'acide 5-amino-2-naphtalènesulfonique,
l'acide 1-amino-5-naphtalènesulfonique,
l'acide 1-amino-8-naphtalènesulfonique,
l'acide 1-naphtylamino-5,7-disulfonique,
et l'acide 1-naphtylamino-6,8-disulfonique.

6. Copolymère selon l'une des revendications 2 à 5, dans lequel un quart desdits radicaux A et/ou B se trouvent sous forme réduite.

7. Copolymère selon la revendication 6, dans lequel la moitié desdits radicaux B est sous la forme oxydée et l'autre moitié est sous la forme réduite.

8. Procédé de fabrication du copolymère selon l'une des revendications 1 à 7, consistant essentiellement en
- une première étape de copolymérisation en solution ou suspension d'un premier monomère, qui est une 1-naphtylamine éventuellement substituée, et d'un second monomère qui est un composé aminoaromatique substitué, et
- une deuxième étape de purification et de séparation du milieu réactionnel dudit copolymère composée d'un premier lavage par une solution aqueuse faiblement basique et d'un deuxième lavage par une solution d'eau et de méthanol.

9. Procédé de fabrication selon la revendication 8, dans lequel ladite copolymérisation est effectuée dans un milieu acide choisi parmi l'acide sulfurique, l'acide phosphorique, l'acide perchlorique, l'acide paratoluènesulfonique, l'acide formique, l'acide acétique et l'acide trifluoroacétique.

10. Procédé de fabrication selon la revendication 8, dans lequel ledit milieu acide contient en outre un solvant ou un dispersant choisi parmi l'eau, les alcools, les cétones, les acides organiques et leurs mélanges.

11. Procédé de fabrication selon la revendication 8, dans lequel on effectue ladite copolymérisation en ajoutant lentement un agent oxydant à la suspension ou solution contenant ledit premier et ledit second monomère.

12. Procédé de fabrication selon la revendication 11, dans lequel ledit agent oxydant est choisi parmi l'eau oxygénée et l'acide iodique.

13. Procédé de fabrication selon la revendication 11, dans lequel ledit agent oxydant est l'oxygène gazeux.

14. Procédé de fabrication selon la revendication 8, dans lequel ladite copolymérisation est effectuée par oxydation en présence d'une électrode active sous tension.

15. Procédé de fabrication selon la revendication 8, dans laquelle ladite copolymérisation est effectuée par oxydation en présence d'un catalyseur.

16. Procédé de fabrication selon la revendication 8, comportant en outre une troisième étape où
- on extrait dudit copolymère une phase soluble par mise en solution dans un solvant basique volatil,
- puis ladite solution est rapidement évaporée sous vide pour obtenir un résidu solide,
- et ledit résidu solide est traité thermiquement.

17. Procédé de fabrication selon la revendication 16, dans lequel ledit solvant est l'ammoniac liquide anhydre.

18. Procédé de fabrication selon la revendication 8, comportant en outre une troisième étape où
- on extrait dudit copolymère une phase soluble par mise en solution dans un solvant basique volatil,
- puis on précipite ladite phase soluble en acidifiant ladite solution.

19. Procédé de fabrication selon la revendication 18, dans lequel ledit solvant est une solution d'une base volatile dans un solvant organique.

20. Procédé de fabrication selon l'une des revendications 16 et 18, caractérisé en ce que la solidification de ladite phase soluble est effectuée sous champ magnétique ou/et électrique.

21. Procédé de mise en oeuvre du copolymère selon la revendication 1, dans lequel ledit copolymère est mis en suspension ou en solution pour former un ferro-fluide.

22. Procédé de mise en oeuvre du copolymère selon la revendication 1, dans lequel ledit copolymère est déposé en couche mince de dimension nanométrique.

23. Procédé de mise en oeuvre selon la revendication 22, dans lequel ledit copolymère est déposé en plusieurs couches minces séparées par une couche d'un matériau magnétique différent dudit copolymère.

24. Application du copolymère selon la revendication 1, aux supports photographiques et radiographiques, aux microscopes, aux dispositifs hyperfréquences, aux dispositifs de contrôle du magnétisme, aux systèmes optiques, aux systèmes électro-magnéto-optiques et électro-magnéto-résistifs.

## Patentansprüche

1. Copolymer mit magnetischen Eigenschaften, dessen Elementareinheit
- einen ersten mehrwertigen Rest aus einer Verbindung, ausgewählt zwischen 1-Naphtylamin, ggf. substituiert, in reduzierter oder oxidierter Form und
- einen zweiten mehrwertigen Rest aus einer aminoaromatischen Verbindung, ausgewählt zwischen einer substituierten Aminoverbindung mit wenigstens zwei kondensierten Benzolkernen, einer substituierten polyzyklischen Verbindung, welche wenigstens eine Anilineinheit in ihrer Struktur aufweist, und einem Anilinderivat mit einem Substituenten, der durch ein Ethynyliden oder Paraphenylen mit dem Kern verbunden ist, wobei diese Verbindungen in reduzierter oder oxidierter Form vorliegen,
aufweist, wobei die genannten ersten und zweiten Reste durch eine Kohlenstoff-Stickstoffverbindung verbunden sind und die Stickstoffatome durch einen einzigen aromatischen Ring getrennt sind.

2. Copolymer gemäß Anspruch 1, in welchem die genannte Elementareinheit, die den genannten ersten Rest A und den genannten zweiten Rest B in ihrer oxidierten oder reduzierten Form aufweist, der allgemeinen Formel entspricht, wobei in dem genannten Rest A
- Ri (i = 1 - 4) einen bis vier Substituenten darstellt, wobei jeder Substituent zwischen Wasserstoff, den Resten Chlor-, Brom-, Fluor- und Jod-, einem Alkoxi-Alkyl-Rest und einem ggf. substituierten Aril-Rest ausgewählt wird,
- Rj (j ≃ 1 oder 2) ein oder zwei Substituenten darstellt, wobei jeder Substituent zwischen Wasserstoff, den Resten Chlor-, Brom-, Fluor- und Jod-, einem Alkoxi-Alkyl-Rest und einem ggf. substituierten Aril-Rest ausgewählt wird,
- und R ein Substituent ist, der zwischen Wasserstoff, einem Alkyl-Rest und einem ggf. substituierten Aril-Rest ausgewählt wird,
und wobei in dem genannten Rest B
- Y wenigstens ein protonenspendender Substituent ist, welcher in der Lage ist, ein internes Salz mit einem der Sticketoffatome zu bilden, von welchen er durch einen Rest A getrennt ist,
- und X ein mehrwertiger Rest aus einer Verbindung ist, die wenigstens einen aromatischen Ring enthält, der in der Lage ist, in der Hauptkette des genannten Copolymers Platz zu nenmen und zwischen einer Verbindung, die wenigstens zwei kondensierte Benzolkerne enthält, einer polyzyklischen Verbindung, die wenigstens einen aromatischen Kern enthält, einer Verbindung mit einem aromatischen Kern, der ein Ethynyliden- oder Phenilenkettenglied trägt, ausgewählt wird,
und wobei in der genannten allgemeinen Formel
- p und q stokastische ganze Zahlen zwischen 1 und 3 und
- n eine höchstmögliche Zahl, größer als 2, ist.

3. Copolymer nach Anspruch 2, in welchem die drei folgenden Bedingungen simultan erfüllt sind:
- q = 1 und p = 1,
- die Verbindung X-Y ist steif,
- Y ist wenigstens ein Substituent, der zwischen einem Sulfo-, Phosphono- und Carboxy-Substituent ausgewählt wird.

4. Copolymer nach einem der Ansprüche 2 und 3, in welchem X ein mehrwertiger Reet aue einer Verbindung mit einem Naphtalenkern ist.

5. Copolymer nach einem der Ansprüche 2 bis 4, in welchem der genannte Rest B ein mehrwertiger Rest aus einer Säure, welche zwischen:
8-Amino-2-Naphtalensulfonsäure,
5-Amino-2-Naphtalensulfonsaure,
1-Amino-5-Naphtalensulfonsäure,
2-Amino-8-Naphtalensulfonsäure,
1-Naphtylamino-5,7-Disulfonsaure, und
1-Naphtylamino-6,8-Disulfonsäure
ausgewählt wird, ist.

6. Copolymer gemäß einem der Ansprüche 2 bis 5, in welchem ein Viertel der genannten Reste A und/oder B in reduzierter Form vorliegt.

7. Copolymer gemäß Anspruch 6, in welchem die Hälfte der genannten Reste B in oxidierter Form und die andere Hälfte in reduzierter Form vorliegt.

8. Verfahren zur Herstellung eines Copolymers gemäß einem der Ansprüche 1 bis 7, das im Wesentlichen aus
- einem ersten Copolymerisationsschritt, in Lösung oder Suspension, eines ersten Monomers, welches ein ggf. substituiertes 1-Naphtylamin ist, und eines zweiten Monomers, das eine substituierte aminoaromatische Verbindung ist, und
- einem zweiten Reindarstellungs- und Trennungsschritt von der Reaktionsmischung des genannten Copolymers, bestehend aus einem ersten Auswaschen durch eine schwach basische wässrige Lösung und aus einem zweiten Auswaschen mit einer Methanol-Wasserlösung, besteht.

9. Herstellungsverfahren gemäß Anspruch 8, in welchem die genannte Copolymerisation in einer sauren Umgebung ausgeführt wird, die zwischen Schwefelsäure, Phosphorsäure, Perchlorsäure, Paratoluolsulfonsäure, Ameisensäure, Essigsäure und Trifluoro-Essigsäure ausgewählt wird.

10. Herstellungsverfahren gemäß Anspruch 8, in welchem die genannte saure Umgebung zusätzlich ein Lösungsmittel oder ein Dispergiermittel, das zwischen Wasser, Alkoholen, Ketonen, organischen Säuren und deren Mischungen ausgewählt wird.

11. Herstellungsverfahren gemäß Anspruch 8, in welchem die genannte Copolymerisation ausgeführt wird, indem langsam ein Oxidiermittel der Suspension oder Lösung, die das genannte erste und das genannte zweite Monomer enthält, zugefügt wird.

12. Herstellungsverfahren gemäß Anspruch 11, in welchem das genannte Oxidiermittel zwischen wasserstoffperoxid und Jodsäure ausgewählt wird.

13. Herstellungsverfahren gemäß Anspruch 11, in welchem das genannte Oxidiermittel gasförmiger Sauerstoff ist.

14. Herstellungsverfahren gemäß Anspruch 8, in welchem die genannte Copolymerisation durch Oxidation in Anwesenheit einer unter Strom stehenden aktiven Elektrode ausgeführt wird.

15. Herstellungsverfahren gemäß Anspruch 8, in welchem die genannte Copolymerisation durch Oxidation in Anwesenheit eines Katalysators ausgeführt wird.

16. Herstellungsverfahren gemäß Anspruch 8, mit einem zusätzlichen dritten Verfahrensschritt, in welchem
- man aus dem genannten Copolymer eine lösbare Phase durch Auflösung in einem leicht flüchtigen basischen Lösungsmittel extrahiert,
- dann die genannte Lösung schnell unter Vakuum verdampft wird, um einen festen Rückstand zu erhalten,
- der genannte feste Rückstand thermisch behandelt wird.

17. Herstellungsverfahren gemäß Anspruch 16, in welchem das genannte Lösungsmittel wasserfreies flüssiges Ammoniak ist.

18. Herstellungsverfahren gemäß Anspruch 8, mit einem zusätzlichen dritten Verfahrensschritt, in welchem
- aus dem genannten Copolymer eine lösliche Phase durch Auflösung in einem leicht flüchtigen basischen Lösungsmittel extrahiert wird,
- dann die genannte lösliche Phase durch Säuerung der genannten Lösung ausgefällt wird.

19. Herstellungsverfahren gemäß Anspruch 18, in dem das genannte Lösungsmittel eine Lösung einer leicht flüchtigen Base in einem organischen Lösungsmittel ist.

20. Herstellungsverfahren gemäß einem der Ansprüche 16 und 18, dadurch gekennzeichnet, dass die Verfestigung der genannten löslichen Phase unter einem magnetischen und/oder elektrischem Feld ausgeführt wird.

21. Anwendungsverfahren des Copolymers gemäß Anspruch 1, in dem das genannte copolymer in Lösung oder Suspension gebracht wird, um eine Ferroflüssigkeit zu bilden.

22. Anwendungsverfahren eines Copolymers gemäß Anspruch 1, in welchem das genannte Copolymer in Dünnschicht in Nanometerdicke aufgetragen wird.

23. Anwendungsverfahren gemäß Anspruch 22, in welchem das genannte Copolymer in mehreren dünnen Schichten aufgetragen wird, welche durch eine Schicht, die aus einem anderen magnetischen Material besteht, getrennt sind.

24. Anwendung des Copolymers gemäß Anspruch 1, für photographische und radiographische Träger, für Mikroskope, für Hyperfrequenzvorrichtungen, für Magnetkontrollvorrichtungen, für optische Systeme, für elektromagnetooptische Systeme und für elektromagnetoresistive Systeme.

## Claims

1. A magnetic copolymer with a structural unit comprising:
. a first multivalent radical derived from a compound selected from 1-naphthylamine, which may be substituted, in its reduced or oxidized form; and
. a second multivalent radical derived from an aminoaromatic compound selected from a substituted amine containing at least two condensed benzene rings, a substituted polycyclic compound containing at least one aniline unit in its structure, and a compound derived from aniline substituted on the nucleus by an ethynylidene or paraphenylene side chain, these compounds being in their reduced or oxidized forms.
said first and said second radical being coupled together by a carbon-nitrogen bond and the nitrogen atoms being separated by a single aromatic ring.

2. A copolymer according to claim 1, wherein said structural unit contains a first radical A and a second radical B in the oxidized or reduced form having the following general formula: 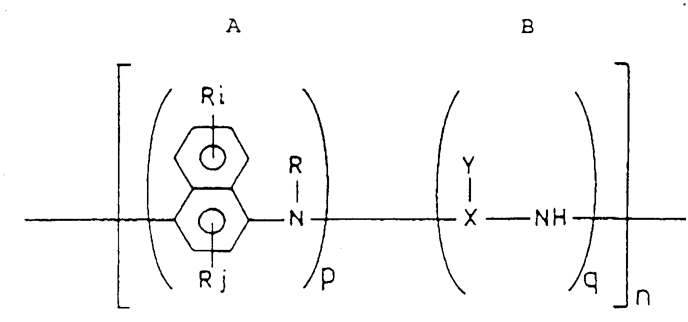 where, in said radical A:
. Rᵢ (i = 1 to 4) represents one to four substituents, each substituent being selected from hydrogen, chloride, bromide, fluoride and iodide radicals, an alkoxyalkyl radical and an aryl radical, which may be substituted,
. Rⱼ (j = 1 or 2) represents one or two substituents, each substituent being selected from hydrogen, chloride, bromide, fluoride and iodide radicals, an alkoxyalkyl radical and an aryl radical which may be substituted, and
. R is a substituent selected from hydrogen, an alkyl radical and an aryl radical which may be substituted,
in said radical B:
. Y is at least one proton-donating substituent which can form an internal salt with one of the nitrogen atoms from which it is separated by radical A, and
. X is a multivalent radical derived from a compound containing at least one aromatic nucleus which can form part of the main chain of said copolymer, selected from a compound containing at least two condensed benzene nuclei, a polycyclic compound containing at least one aromatic nucleus, and a compound containing an aromatic nucleus with an ethynylidene or phenylene side chain,
and in said general formula:
. p and g are random whole numbers between 1 and 3,
. and n is a whole number larger than 2 and as large as possible.

3. A copolymer according to claim 2, wherein the following three conditions are simultaneously satisfied:
. p = 1 and q = 1,
. the X-Y bond is rigid,
. Y is at least one substituent selected from sulfo, phosphono and carboxy substituents.

4. A copolymer according to claim 2 or claim 3, wherein X is a multivalent radical derived from a compound containing a naphthalene nucleus.

5. A copolymer according to any one of claims 2 to 4, wherein said radical B is a multivalent radical derived from an acid selected from:
8-amino-2-naphthalenesulfonic acid,
5-amino-2-naphthalenesulfonic acid,
1-amino-5-naphthalenesulfonic acid,
1-amino-8-naphthalenesulfonic acid,
1-naphthylamino-5,7-disulfonic acid, and
1-naphthylamino-6,8-disulfonic acid.

6. A copolymer according to any one of claims 2 to 5, wherein one fourth of said radicals A and/or B are in the reduced form.

7. A copolymer according to claim 6, wherein half of said radicals B are in the oxidized form and the other half are in the reduced form.

8. A method of manufacture of a copolymer according to any one of claims 1 to 7, essentially consisting in:
. a first copolymerization step, in solution or suspension, of a first monomer, which is a 1-naphthylamine which may be substituted, and a second monomer which is a substituted aminoaromatic compound, and
. a second step for purification and separation of the reaction medium from said copolymer composed of a first washing using a slightly basic aqueous solution, and a second washing using a solution of water and methanol.

9. A method of manufacture according to claim 8, wherein said copolymerization is carried out in an acidic medium selected from sulfuric acid, phosphoric acid, perchloric acid, paratoluenesulfonic acid, formic acid, acetic acid, and trifluoroacetic acid.

10. A method of manufacture according to claim 8, wherein said acid medium further contains a solvent or dispersing agent selected from water, alcohols, ketones, organic acids, and mixtures thereof.

11. A method of manufacture according to claim 8, wherein said copolymerization is carried out by slow addition of an oxidizing agent to the suspension or solution containing said first and said second monomer.

12. A method of manufacture according to claim 11, wherein said oxidizing agent is selected from hydrogen peroxide and iodic acid.

13. A method of manufacture according to claim 11, wherein said oxidizing agent is gaseous oxygen.

14. A method of manufacture according to claim 8, wherein said copolymerization is carried out by oxidation in the presence of an active current carrying electrode.

15. A method of manufacture according to claim 8, wherein said copolymerization is carried out by oxidation in the presence of a catalyst.

16. A method of manufacture according to claim 8, further including a third step comprising
. extracting a soluble phase from the copolymer by dissolution in a volatile basic solvent,
. then rapidly vacuum evaporating the solution to obtain a solid residue, and
. heat treating said solid residue.

17. A method of manufacture according to claim 16, wherein said solvent is anhydrous liquid ammonia.

18. A method of manufacture according to claim 8, further including a third step comprising:
. extracting a soluble phase from said copolymer by dissolution in a volatile basic solvent,
. then precipitating said soluble phase by acidifying said solution.

19. A method of manufacture according to claim 18, wherein said solvent is a solution of a volatile base in an organic solvent.

20. A method of manufacture according to claim 16 or claim 18, characterized in that said soluble phase is solidified in a magnetic and/or electrical field.

21. A method of using a copolymer according to claim 1, wherein said copolymer is suspended or dissolved to form a ferro-fluid.

22. A method of using a copolymer according to claim 1, wherein said copolymer is deposited in a thin layer of nanometric thickness.

23. A method according to claim 22, wherein said copolymer is deposited in several thin layers separated by a layer of magnetic material different to said copolymer.

24. The use of a copolymer according to claim 1 as a photographic or radiographic medium, in microscopes, in ultrahigh-frequency equipment, in magnetism control apparatus, in optical systems, in electro-magneto-optical systems, or in electro-magneto-resistive systems.
